# EUROPEAN PATENT APPLICATION

(11) **EP 1 156 671 A2**
(43) Date of publication of application: **21.11.2001**
(21) Application number: 01304429.2
(22) Date of filing: 18.05.2001
(51) Int. Cl.: H04N 5/00

(54) **Audio/video apparatus**

(30) Priority: 18.05.2000 KR 2000026734; 19.04.2001 KR 2001021120
(71) Applicant: SAMSUNG ELECTRONICS Co. Ltd., Kyungki-do, Seoul (KR)
(72) Inventor: Ju, Pil-sang, 730-1401 Salgugol Hyundai Apt., Suwon-si, Gyeonggi-do (KR); Park, In-shik, Suwon-si, Gyeonggi-do (KR); Jeong, Tae-hong, 107-805 Jangan Town Kunyoung Apt., Seongnam-si, Gyeonggi-do (KR); Pyung, Seong-uk, 201-708 Sunkyung 20cha Apt., Suwon-si, Gyeonggi-do (KR)
(74) Representative: Geary, Stuart Lloyd

(57) **Abstract**

An audio/video apparatus comprises a main unit with a rack (16) into which modules (17) can be removeably plugged. The modules (17) provide content signals to the main unit where they are made perceivable. The modules (17) and the main unit also exchange control signals and HTML is provided by the modules (17) to the main unit to define a suitable user interface for their control.

## Description

The present invention relates to an audio and/or video apparatus comprising output means for producing a perceivable output signal in dependence on an input signal, a plurality of sources of content signals for controlling the output means and control means for selectively applying content signals from said sources to the output means.

Digital terrestrial broadcasting which complies with the Advanced Television Systems Committee (ATSC) standards has begun. Consumer electronics product manufacturers are disclosing various digital media products, including digital televisions capable of receiving digital broadcasts and digital versatile disc (DVD) players and digital video recorders capable of recording and reproducing digital broadcasts.

As various digital media apparatuses particularly related to the digital TV market are being introduced, potential consumers are being confused. New specifications are being developed at such a rate that digital TVs are becoming more complicated and new products are quickly becoming obsolete.

New digital media products such as digital broadcast receiving apparatuses, satellite broadcast receiving apparatuses, DVD players, hard disc drives and Internet access apparatuses, increase the number of manipulation methods a user has to learn and the number of remote controllers. In addition, a user has to pay a lot of money to buy digital media products. Also, the digital media products take up a large amount of space in the home and each digital media product needs a power line for operation. For operating a product that reproduces images displayed on a digital TV, such as a DVD player, the product needs to be be connected to a digital TV using an electric lead.

However, the appearance of digital media products has made it possible to have a home network connecting multiple home appliances in a house. If the home network is implemented, a user can control multiple appliances in the house with only one apparatus. In addition, the user can control the appliances in the house through the Internet even when the user is in a remote place.

A known example of a multifunction audio/video device is a combined television and video cassette recorder.

An apparatus according to the present invention is characterised in that one of said sources comprises a module releasably mounted at a mechanical mounting point of a main part of said apparatus, the module and mounting point including means for the communication, for example by electric or electromagnetic means, of content signals and control signals between said module and said control and output means.

In accordance with now established practice, the term "content" is used to indicate signals that define the what is to be perceived, e.g. still images, video, music, animation, game scenes etc..

Preferably, a plurality of mounting points for modules constituting sources of content signals are provided. The mounting points may comprise slots in a rack-like structure. More preferably, the control means is configured for routing content signals between modules, e.g. for recording video signals from a broadcast TV receiving module in a DVD recording module.

Preferably, the output means includes a display means, the or each module includes means for sending control signals comprising markup language codes to the control means and the control means is responsive to said markup language codes to generate an image on the display means. More preferably, said image constitutes part of a user interface for controlling the respective module and the control means is responsive to operation of user input means in the context of a displayed image to generate control signals for the respective module.

An embodiment of the present invention will now be described, by way of example, with reference to the accompanying drawings, in which:
Figures 1A and 1B are front views of a first modular television with a module rack door closed and open respectively;
Figure 1C is a perspective view of the second modular television;
Figure 1D is a perspective view of a third televsion;
Figures 2 and 3 are diagrams illustrating structures for connecting a base module and function-extending modules through a module rack;
Figures 4A and 4B are block diagrams of a modular television according to the present invention;
Figures 5A and 5B are block diagrams of a broadcast receiving module according to the present invention;
Figures 6A and 6B are block diagrams of a digital satellite broadcast receiving module according to the present invention;
Figure 7 is a block diagram of a hard disc drive module according to the present invention;
Figure 8 is a block diagram of a digital versatile disc (DVD) module according to the present invention;
Figure 9 is a block diagram of an Internet access module according to the present invention;
Figure 10 is a block diagram of a game module according to the present invention;
Figure 11 is a block diagram of a digital video cassette recorder (DVCR) according to the present invention;
Figure 12 illustrates a protocol stack for inter-module communication;
Figure 13 is a flowchart of a control process for a modular television system according to the present invention; and
Figure 14 is a diagram of an example of a main user interface page.

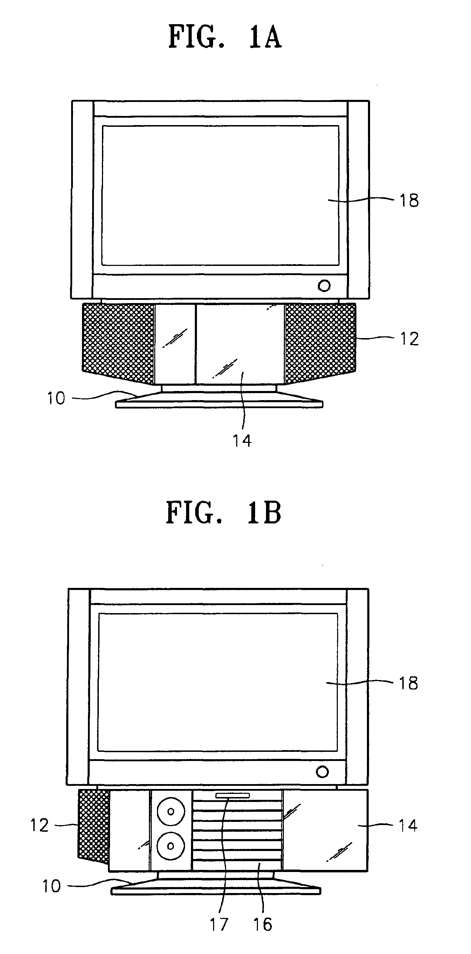

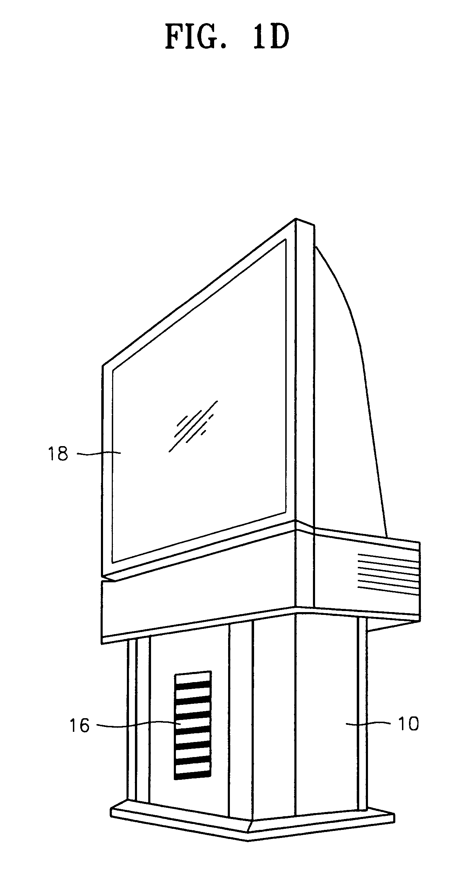

Referring to Figures 1A through 1D, a modular TV system has a display device 18 supported by a TV stand 10. The display device 18 may be a cathode-ray tube (CRT), a ferroelectric LCD (FLCD), a field emission display (FED), or a plasma display panel (PDP). A module rack 16 is installed in the middle of the TV stand 10 under the display device 18, and speakers 12 are installed to the right and left of the module rack 16.

Referring to Figures 1A and 1B, a door which is opened and closed by sliding or rotating is attached to the module rack 16. A plurality of module-receiving holes are formed in the front of the module rack 16 which is exposed to the outside when the door 14 is open. A digital video cassette recorder (DVCR) module is inserted into the uppermost module-receiving hole. The DVCR has a hole 17 for receiving a digital video tape. The DVCR module is an example of a function-extending module.

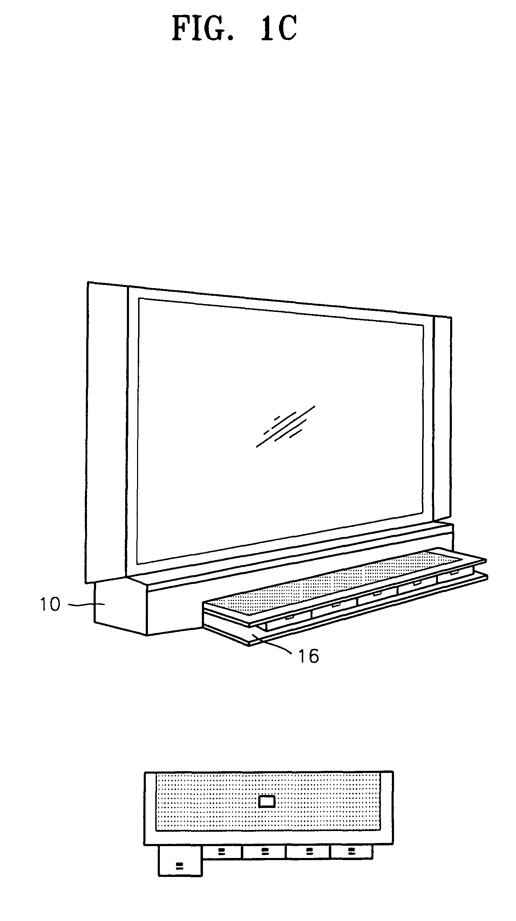

Referring to Figure 1C, module-receiving holes may be formed in a horizontal row so that a plurality of function-extending modules can be inserted in a row.

Function-extending modules are for extending the functions of the modular TV system. For example, if a user buys a DVD module and installs the DVD module in the module rack 16, the modular TV system will have a DVD player function.

A base module (not shown) is installed at the back of the module rack 16. The base module communicates control signals with the function-extending modules in a client-server fashion. That is, the base module receives control information from the function-extending modules, inserted into the module rack 16, and outputs and displays the received control information on the display device 18. If a user input corresponding to the displayed control information is received, the base module sends the user input to one of the function-extending modules. In response to the input information, the function-extending module sends A/V data to the base module. The base module processes the received A/V data and then outputs the A/V data to the display device 18 and/or the speakers 12.

For example, the function-extending module stores an index page containing control information for controlling itself and the base module has a browser for selecting a function-extending module. The browser displays a main page, in which selection information for at least one or more function-extending modules is contained, for the user. The browser requests an index page from a function-extending module selected by the user through the main page, and displays the index page to the user. If the user inputs a control command through the displayed index page, the browser sends the control command again to the function-extending module.

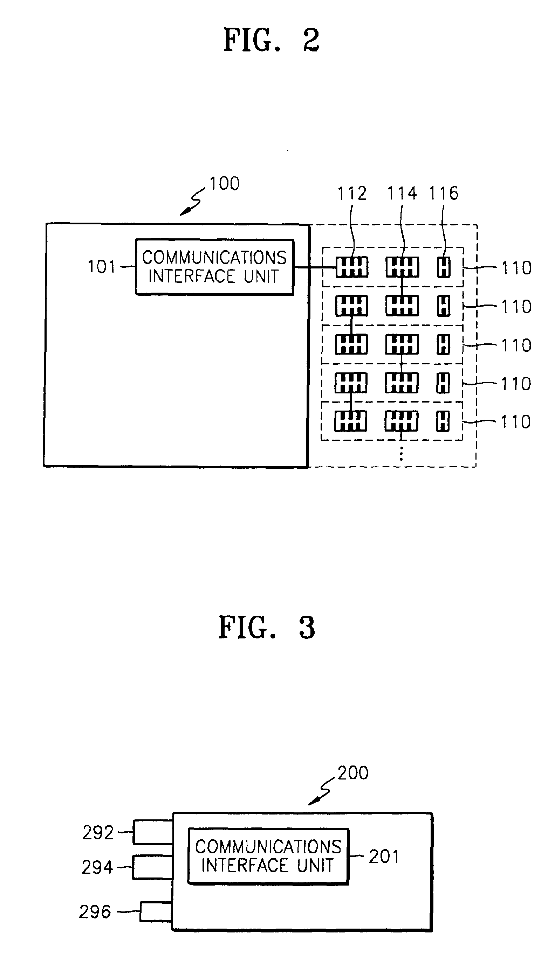

Referring to Figure 2, the base module 100 has a plurality of connectors 110 for module connection. Each connector 110 contains two communications ports 112, 114 and one power connection port 116. The two communications ports 112, 114 and the power connection port 116 are designed so that each function-extending module can be easily inserted and connected into a module-receiving hole (not shown) of the module rack 16.

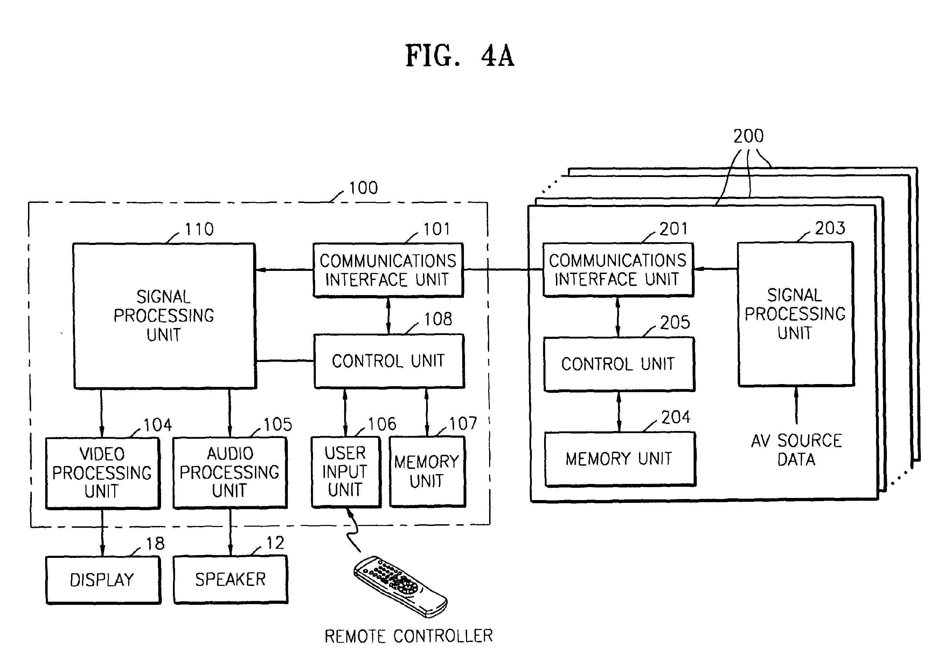

Referring to Figure 3, a function-extending module 200 also has two communications ports 292, 294 and one power connection port 296. Since the function-extending module 200 is in a casing, the communications ports 292, 294 and power connection port 296 are formed so as to protrude from the casing. Therefore, if the function-extending module 200 is inserted into a module-receiving hole formed in the module rack 16, the corresponding ports contact each other and the base module 100 and the function-extending module 200 are electrically connected. Also, if a plurality of function-extending modules 200 are inserted into the module rack 16, the plurality of function-extending modules are connected to the base module 100 in a daisy-chain fashion. The method for connecting the base module 100 to the plurality of function-extending modules 200 may be determined in various ways as needed. Here, communications ports 112, 114 of the base module 100 and communications ports 292, 294 of the function-extending module are electrically connected to their own communications interface units 101, 201. Each of the communications interface units 101, 201 may be implemented as an IEEE 1394 interface unit complying with the IEEE 1394 protocol. The communications interface units 101, 201 can be connected through a universe serial bus (USB), a peripheral interconnect (PCI) bus, or a Fast-Ethernet. Also, other communications protocols that support appropriate transmission speed with respect to A/V data to be transmitted can be adopted.

Referring to Figure 4A, a base module 100 has a communications interface unit 101, a signal processing unit 110, a video processing unit 104, an audio processing unit 105, a user input unit 106, a memory unit 107, and a control unit 108.

The memory unit 107 includes a RAM, ROM, and a flash memory depending on the embodiment of the present invention. The RAM is used as a buffer for processing image data which forms a main page to be explained later, the ROM stores a browser for searching for a function-extending module 200, and the flash memory stores the Internet protocol (IP) address of the function-extending module 200.

The user input unit 106 receives user inputs, which are input through a command key (not shown) or a remote controller, and sends the user inputs to the control unit 108. The communications interface unit 101 communicates data with the outside. In the signal processing unit 110, the A/V data, which is received through the communications interface unit 101, is divided into video data and audio data, processed, and then the video data and audio data are output to the video processing unit 104 and the audio processing unit 105 respectively. The video processing unit 104 processes the video data output from the signal processing unit 110 and sends the video data to the display device 18, and the audio processing unit processes the audio data output from the signal processing unit 110 and sends the audio data to the speakers 12.

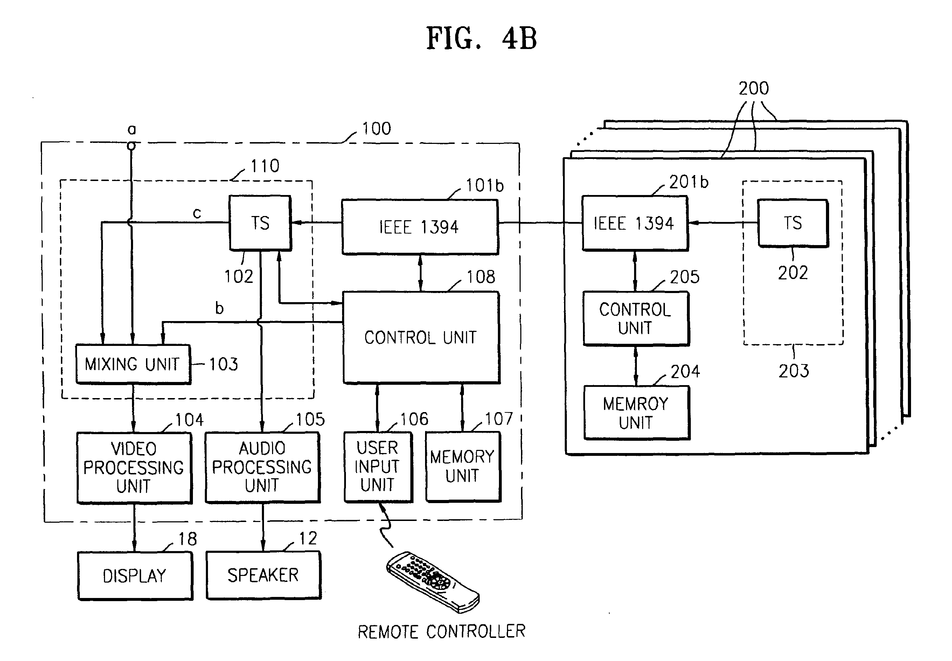

Referring to Figure 4B, if the A/V data received by the base module 100 is an MPEG transport stream, the signal processing unit 110 has a transport stream processing unit 102 for demultiplexing the MPEG transport stream. If the communications interface unit 101 is implemented as an IEEE 1394 interface unit 101b, the communications interface unit 101 sends and receives an MPEG transport stream, a state signal or a control signal, which are sent according to the IEEE 1394 protocol, and sends the MPEG transport stream to the transport stream processing unit 102 and state and control signals to the control unit 108.

The mixing unit 103 generates an image or text information signal, which is input from the outside (a), or from the control unit 108 (b), overlays it onto a video signal (c), and outputs the overlayed signal to the video processing unit 104. By doing so, data, including caption data, can be displayed.

Referring to Figure 4A, the function-extending module 200 has a communications interface unit 201, a signal processing unit 203, a memory unit 204, and a control unit 205.

The communications interface unit 201 communicates with the base module 100. The memory unit 204 stores an IP address assigned to the function-extending module 200, an index page, and a function-performing program needed to perform a function given to the function-extending module 200, and, when necessary, source A/V data. The signal processing unit 203 signal processes source A/V data and outputs the processed A/V data to the communications interface unit 201. The control unit 205 provides the IP address and index page to the base module 100, and responds to a user input, which is received by the base module 100, so that corresponding A/V data can be sent to the base module 100. Also, when necessary, the control unit 205 sends an install program, which the base module 100 requires to control the function-extending module 200, to the base module 100.

The source A/V data is data that is requested by the user, and is provided to the function-extending module 200 from the outside or is stored in the memory unit 204 of the function-extending module 200. The type of source A/V data depends on the function of the function-extending module 200. If the function-extending module 200 is a DVD module for performing a DVD player function, the source A/V data is A/V data recorded on the DVD. If the function-extending module 200 is a hard disk drive (HDD) module, the source A/V data is data recorded on a hard disk.

The signal processing unit 203 processes signals appropriately depending on the characteristics of the source A/V data. For example, if the function-extending module 200 is a cable broadcast receiving module for receiving a cable broadcast signal, the signal processing unit 203 demodulates and decodes a cable broadcast signal received through a tuner. If the function-extending module 200 is a DVD module, the signal processing unit 203 decodes data read from a DVD and provides the decoded data to the communications interface unit 201, or encodes data provided by other function-extending modules and records the encoded data on a writeable DVD.

The memory unit 204 has a RAM, a ROM, and a flash memory as the base module 100. The RAM may be used as a buffer. The ROM stores an application program so that the function-extending module 200 can operate as a server for the browser in the base module 100. In particular, the ROM stores an index page which is needed by the function-extending module 200 operating as a server to the base module 100. The flash memory stores an IP address assigned to the function-extending module 200.

The control unit 205 operates the server stored in the ROM so that the function-extending module 200 communicates with the base module 100 in a client-server fashion.

Referring to Figure 4B, if the function-extending module 200 communicates an MPEG transport stream with the base module 100, the signal processing unit 203 has a transport stream processing unit 202 which multiplexes or demultiplexes the MPEG transport stream. If the communications interface unit 201 is implemented as an IEEE 1394 interface unit 201b, the communications interface unit 201 sends and receives an MPEG transport stream, a state signal or a control signal, which are sent according to the IEEE 1394 protocol.

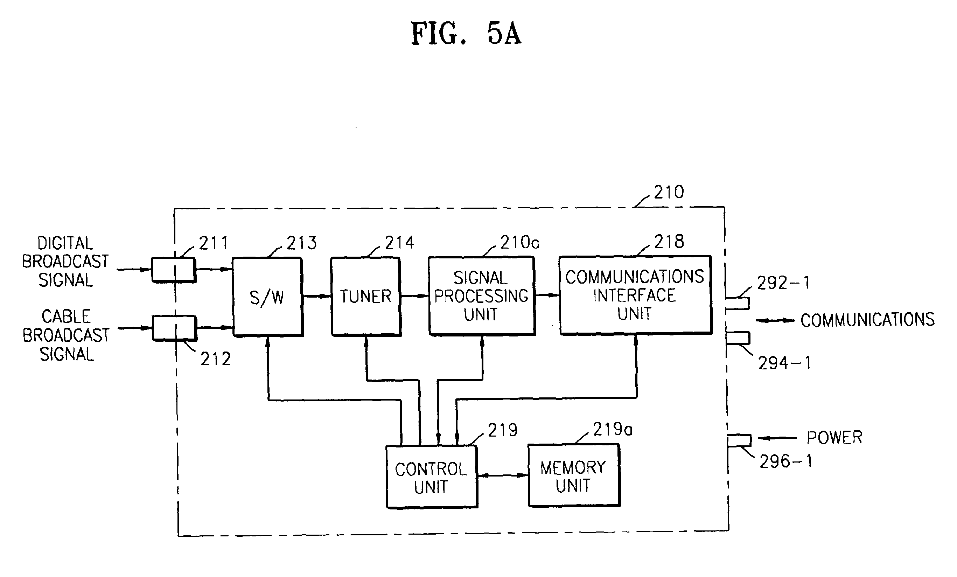

Referring to Figure 5A, a broadcast television receiving module 210 has a receiving terminal 211 for receiving a digital broadcast signal, a receiving terminal 212 for receiving a cable broadcast signal, a switching unit 213 for selecting one of the receiving terminals 211, 212, a tuner 214, a signal processing unit 210a, a communications interface unit 218, a memory unit 219a and a control unit 219. The broadcast receiving module 210 also has communications ports 292-1, 294-1 and a power connection port 296-1, which protrude from from the casing of the broadcast receiving module 210.

The receiving terminals 211, 212 receive a digital broadcast signal and a cable broadcast signal transmitted from the outside. The switching unit 213 selects one of the receiving terminals 211, 212. The tuner 214 selects one of the digital broadcast signal and cable broadcast signal received through the receiving terminals 211, 212, respectively. The signal processing unit 210a processes the signal selected by the tuner 214 and outputs the signal to the communications interface unit 218. The communications interface unit 218 communicates with the base module 100. The memory unit 219a stores the assigned IP address and an index page. The control unit 219 provides the IP address and index page to the base module 100, and controls the communications interface unit 218 so that the transport stream, which is output from the signal processing unit 210a in response to a user input received by the base module 100, is sent to the base module 100 through the communications interface unit 218.

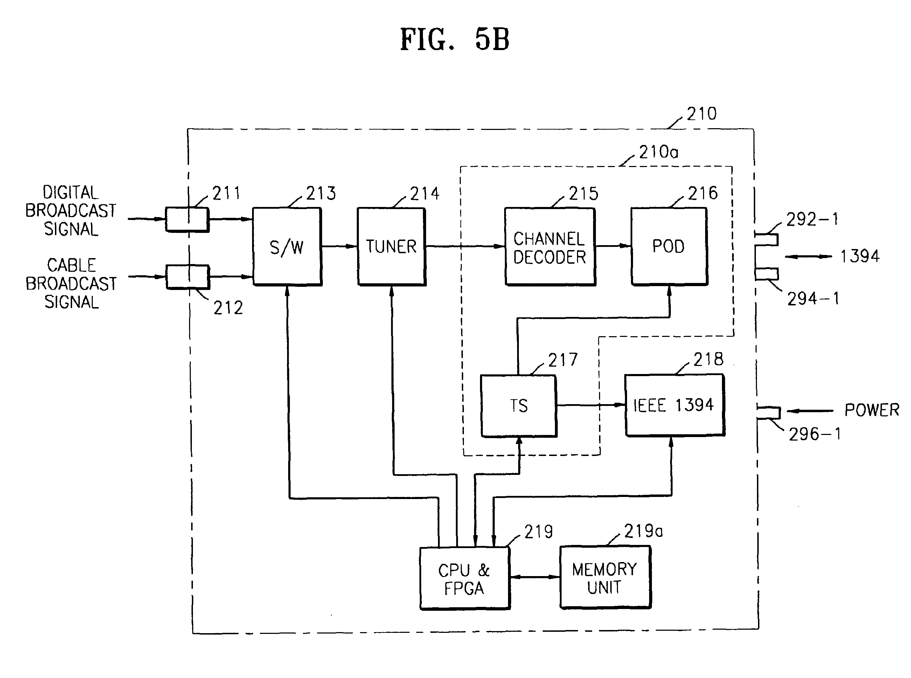

For example, referring to Figure 5B, the signal processing unit 210a has a channel decoder 215 for channel decoding, a card connection unit 216, and a transport stream processing unit 217 for demultiplexing a transport stream. The communications interface unit 218 may be implemented as an IEEE 1394 interface unit complying with the IEEE1394 protocol. The card connection unit 216 may be implemented as a point of deployment (POD) connection unit, into which a POD card for authenticating a user identification is inserted. The POD connection unit reads a user identification number from a POD card inserted by a user, and if the user is authenticated, it electrically connects the channel decoder 215 and the transport stream processing unit 217 so that the broadcast receiving module 210 can operate.

However, a digital broadcast module or a cable broadcast module may be separately implemented by making a digital broadcast receiving module with only a receiving terminal 211 for receiving a digital broadcast signal and without a switching unit 213, or by making a cable broadcast receiving module with only a receiving terminal 212 for receiving a cable broadcast signal and without a switching unit 213.

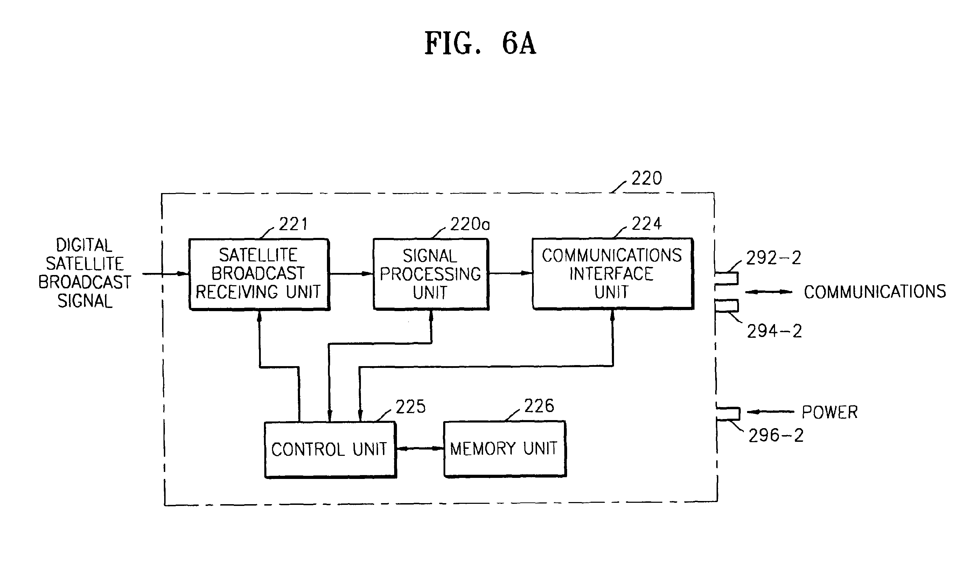

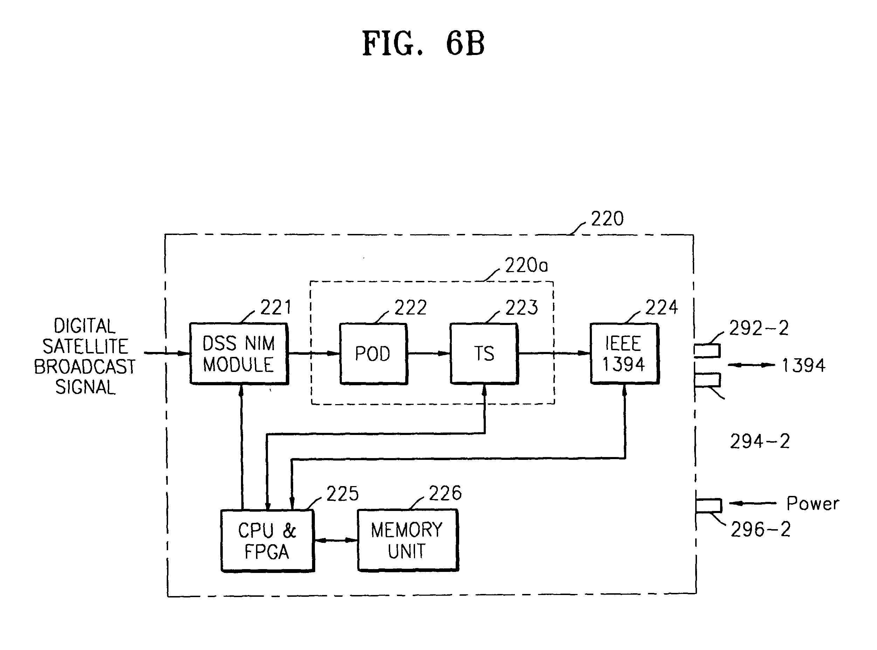

Referring to Figures 6A and 6B, a digital satellite broadcast receiving module 220 has a satellite broadcast receiving unit 221, a signal processing unit 220a, a communications interface unit 224, a memory unit 226, and a control unit 225. The digital satellite broadcast receiving module 220 also has communications ports 292-2, 294-2 and a power connection port 296-2, which protrude from the casing of the digital satellite broadcast receiving module 220.

The digital satellite broadcast receiving unit 221 receives a digital satellite broadcast signal. The signal processing unit 220a processes the received digital satellite broadcast signal. The communications interface unit 224 communicates with the base module 100. The memory unit 226 stores an IP address and an index page. The control unit 225 provides the IP address and index page to the base module 100, and controls communications interface unit 224 so that a digital satellite broadcast signal, which corresponds to a user input received by the base module 100, is sent to the base module 100 through the communications interface unit 224.

For example, referring to Figure 6B, the signal processing unit 220a has a card connection unit 222 and a transport stream processing unit 223. Also, the communications interface unit 224 may be implemented as an IEEE 1394 interface unit complying with the IEEE 1394 protocol. The card connection unit 222 can be implemented as the POD connection unit, which was explained with reference to Figure 5B.

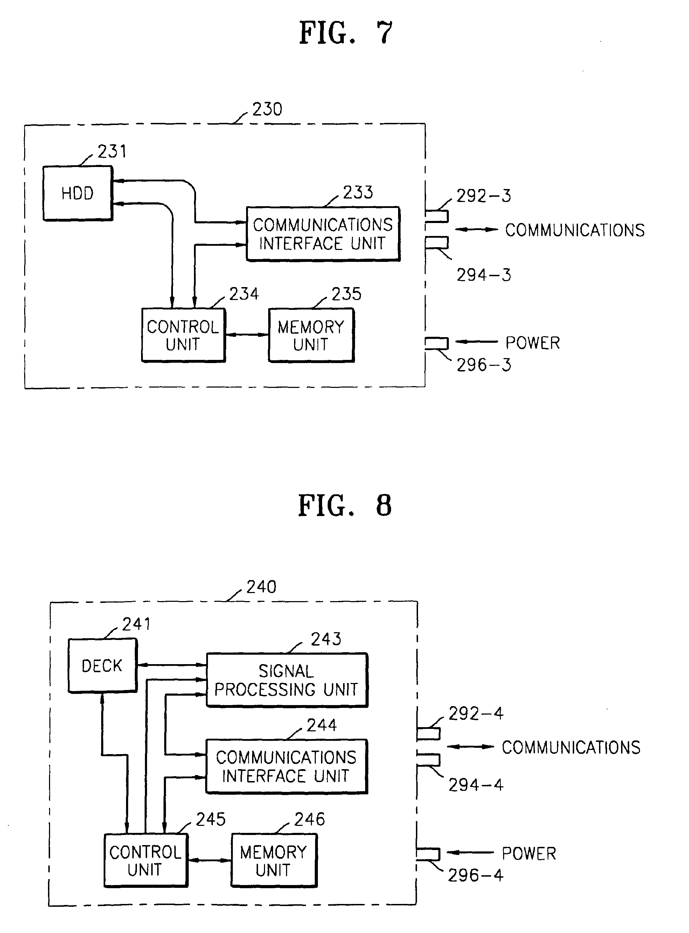

Referring to Figure 7, a hard disc drive module 230 has a hard disc drive 231, a communications interface unit 233, a memory unit 235, and a control unit 234. The hard disc drive module 230 also has communications ports 292-3, 294-3 and a power connection port 296-3, which protrude from the casing of the hard disc drive module 230.

The memory unit 235 stores an IP address and an index page. In the index page, a GUI-type user interface for controlling the hard disc drive module 230 is displayed. The communications interface unit 233 communicates with the base module 100. The control unit 234 provides the IP address assigned to the hard disc drive module 230 and the index page to the base module 100, and controls the hard disc drive module 230 so that data recorded on the hard disc 231 is sent to the base module 100 through the communications interface unit 233 in response to a user input received by the base module 100. Also, the communications interface unit 233 may be implemented as an IEEE 1394 interface unit complying with the IEEE 1394 protocol.

Referring to Figure 8, a DVD module 240 has a deck unit 241, a signal processing unit 243, a communications interface unit 244, a memory unit 246 and a control unit 245. Also, the DVD module has communications ports 292-4, 294-4 and a power connection port 296-4, which protrude from the casing of the DVD module 240.

A DVD is loaded into the deck unit 241 so that source A/V data can be read or recorded. The signal processing unit 243 reads source A/V data from the DVD mounted on the deck unit 241 and processes the data so as to reproduce it, or processes A/V data input from the outside so as to record it as source A/V data. The communications interface unit 244 communicates with the base module 100. The memory unit 246 stores an IP address and an index page. In the index page, a GUI-type user interface for controlling the DVD module 240 is defined. The control unit 245 provides the IP address and index page to the base module 100, and controls the deck unit 241, the signal processing unit 243 and the communications interface unit 244 so that source A/V data, which is read from the DVD in response to a user input received by the base module 100 and processed by the signal processing unit 243, is sent to the base module 100 through the communications interface unit 244.

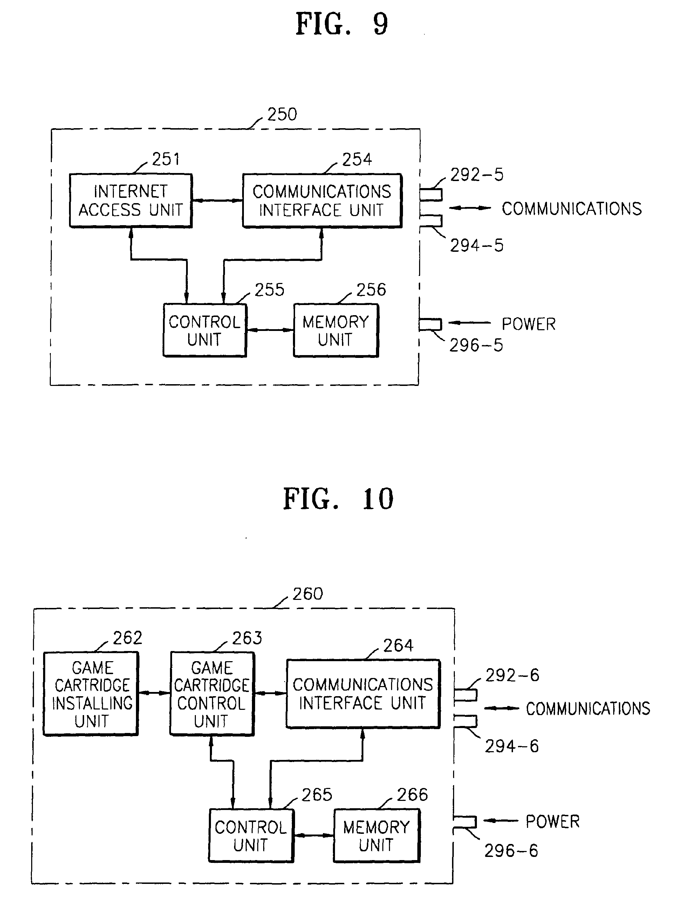

Referring to Figure 9, an Internet access module 250 has an Internet access unit 251, a communications interface unit 254, a memory unit 256 and a control unit 255. Also, the Internet access module 250 has communications ports 292-5, 294-5 and a power connection port 296-5, which protrude from the casing of the Internet access module 250.

The Internet access unit 251 provides access to the Internet. The communications interface unit 254 communicates with the base module 100. The memory unit 256 stores an IP address and an index page. In the index page, a GUI-type user interface for controlling the Internet access module 250 is defined. The control unit 255 provides the IP address and index page to the base module 100 and controls the Internet access unit 251 and the communications interface unit 254 so that a web page received through the Internet access unit 251, in response to a user input received by the base module 100, is sent to the base module 100 through the communications interface 254. Also, the communications interface unit 254 may be implemented as an IEEE 1394 interface unit complying with the IEEE 1394 protocol. In addition, a USB bus or a PCI bus can be used or other communications protocols that support appropriate transmission speed with respect to A/V data to be transmitted, such as a Fast-Ethernet, can be adopted.

Referring to Figure 10, a game module 260 has a game cartridge installing unit 262, a game cartridge control unit 263, a communications interface unit 264, a memory unit 266, and a control unit 265. Also, the game module has communications ports 292-6, 294-6, and a power connection port 296-6, which protrude from the casing of the game module 260.

In the game cartridge installing unit 262, a game cartridge is inserted. The game cartridge control unit 263 controls the game cartridge installing unit 262. The communications interface unit 264 communicates with the base module 100. The memory unit 266 stores an IP address and an index page. In the index page, a GUI-type user interface for controlling the game module 260 is defined. The control unit 265 provides the IP address and index page to the base module 100, and controls the game module 260 so that game contents stored in a game cartridge (not shown) are sent to the base module 100 through the communications interface unit 264. Also, the communications interface unit 264 may be implemented as an IEEE 1394 interface unit complying with the IEEE 1394 protocol. In addition, a USB bus or a PCI bus can be connected, or other communications protocols that support appropriate transmission speed with respect to A/V data to be transmitted, such as a Fast-Ethernet, can be adopted.

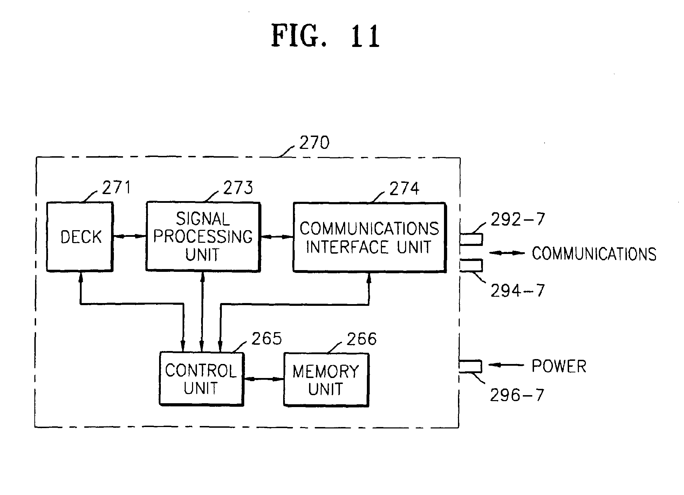

Referring to Figure 11, a DVCR module 270 has a deck unit 271, a signal processing unit 273, a communications interface unit 274, a memory unit 276 and a control unit 275. Also, the DVCR module 270 has communications ports 292-7, 294-7 and a power connection port 296-7, which protrude from the casing of the DVCR module 270.

On the deck unit 271, a DVCR is mounted so that source A/V data can be read. The signal processing unit 273 reads source A/V data from the DVCR mounted on the deck unit 271 and processes the data. The communications interface unit 274 communicates with the base module 100. The memory unit 276 stores an IP address and an index page. In the index page, a GUI-type user interface for controlling the DVCR module 270 is defined. The control unit 275 provides the IP address and index page to the base module 100, and controls the deck unit 271, the signal processing unit 273, and the communications interface unit 274 so that source A/V data, which is read from the DVCR in response to a user input received by the base module 100 and processed by the signal processing unit 273, is sent to the base module 100 through the communications interface unit 274. Also, the communications interface unit 274 may be implemented as an IEEE 1394 interface unit complying with the IEEE 1394 protocol. In addition, a USB bus or a PCI bus can be connected, or other communications protocols that support appropriate transmission speed with respect to A/V data to be transmitted, such as a Fast-Ethernet, can be adopted.

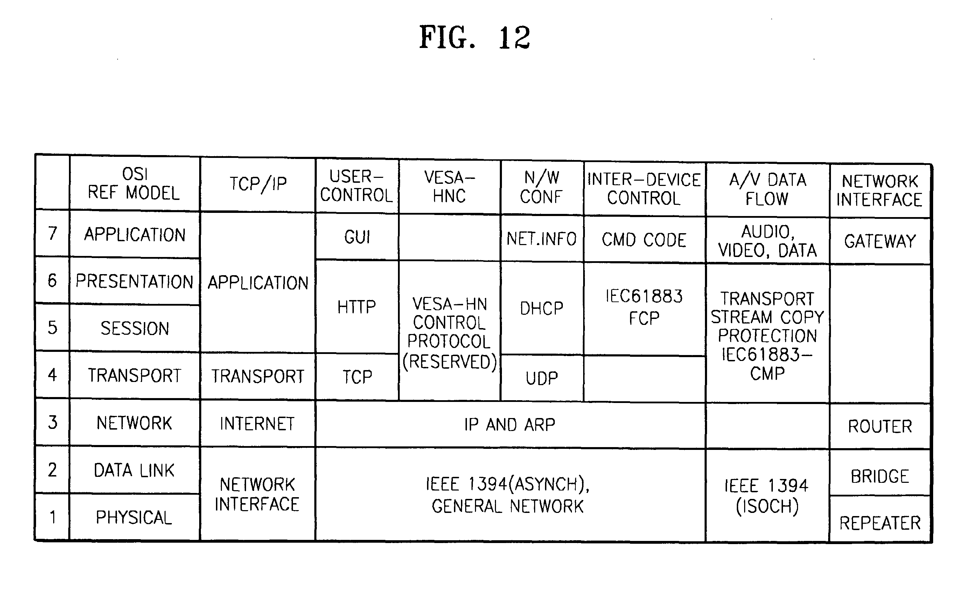

Referring to Figure 12, data communications between the base module 100 and a function-extending module complies with the IEEE 1394 protocol.

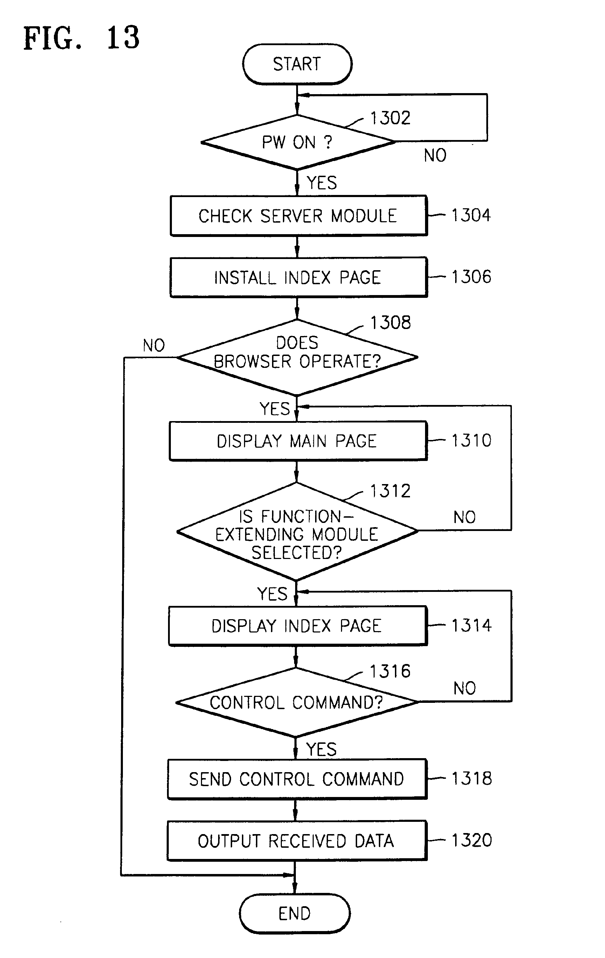

Referring to Figure 13, when the modular TV system is turned on in step 1302, the base module 100, which is a client, determines whether or not any function-extending modules 200 are inserted into the module rack 16 in step 1304.

Each inserted function-extending module 200 sends its index page to the base module 100, and the base module 100 installs the received index page in step 1306. At this time, the function-extending module 100 also sends its IP address and the base module 100 stores the received IP address. However, the step for sending and receiving the IP address may be performed independently from step 1306.

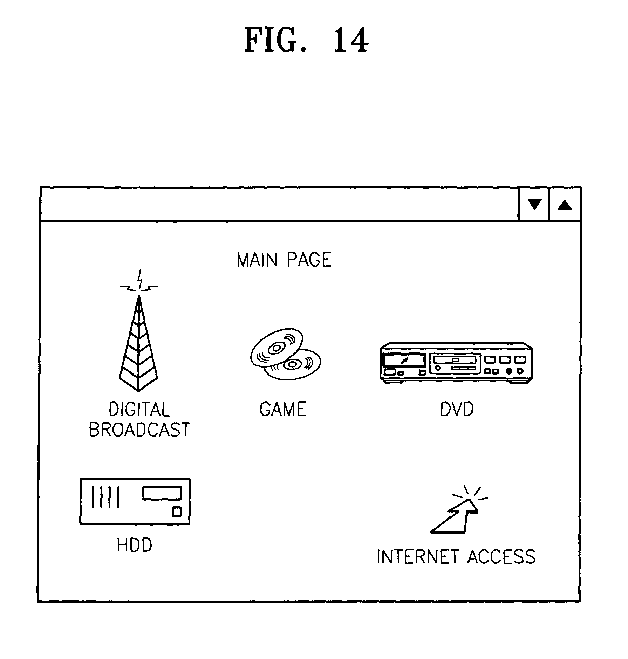

When the user starts the operation of the base module 100, the browser in the base module 100 begins to operate in step 1308, and displays a main page, as shown in Figure 14, in step 1310. In the main page, icons indicating various function-extending modules, as described above, are displayed. An icon may be sent by a function-extending module after it has been requested, or may be stored in the base module 100 and then displayed in the main page. If a main page is formed so that an icon is sent by each corresponding function-extending module after it has been requested, the manufacturer of the function-extending modules may load various icons on the function-extending modules so that icons displayed in the main page can change in various ways.

When the user selects an icon displayed in the main page in step 1312, the browser of the base module 100 calls the index page of a function-extending module 200 corresponding to the selected icon and displays the index page in step 1314. (Step 1306 can be omitted and the index page can be called directly from the corresponding function-extending module 200 in step 1314).

Since a GUI-type user interface is displayed in the displayed index page, if an icon for performing a predetermined function is selected in step 1316, the selected control command (user input) is sent to the corresponding function-extending module 200 in step 1318. Then an operation corresponding to the received control command is executed in the function-extending module 200. For example, if an content is selected in the index page of the DVCR module 250 and an icon for reproducing the content is selected, the name of the selected content and a control command for reproducing the contents are sent to the DVCR module 250 and the DVCR module 250 reads the selected content and sends the content to the base module 100. The base module 100 processes data received from the corresponding function-extending module 200 and outputs the processed data in step 1320.

Although a modular TV system was used to explained the present invention, the A/V system is not limited to modular TV systems. That is, the modular TV system is basically equipped with the digital broadcast receiving module for receiving a digital broadcast signal. However, in the present invention the digital broadcast receiving module for receiving digital broadcast signal can be mounted according to the user's selection as a function-extending module for an A/V system.

As described above, according to the present invention, an A/V system which implements a plurality of digital media apparatuses in one apparatus and function-extending modules therefor are provided. In particular, a user can select specifications and upgrade the system as the user wants.

## Claims

1. An audio and/or video apparatus comprising output means (12, 18, 104, 105, 110) for producing a perceivable output signal in dependence on an input signal, a plurality of sources (17) of content signals for controlling the output means (12, 18, 104, 105, 110) and control means (108) for selectively applying content signals from said sources (200, 210, 220, 230, 240, 250, 260) to the output means (12, 18, 104, 105, 110), **characterised in that** one of said sources (200, 210, 220, 230, 240, 250, 260) comprises a module (17) releasably mounted at a mechanical mounting point (16, 110) of a main part (10) of said apparatus, the module (17) and mounting point (16, 110) including means (292-1, 294-1, 292-2, 294-2, 292-3, 294-3, 292-4, 294-4, 292-5, 294-5, 292-6, 294-6) for the communication of content signals and control signals between said module (17) and said control and output means (12, 18, 104, 105, 108, 110).

2. An apparatus according to claim 1, including a plurality of mounting points (16, 110) for modules constituting sources (200, 210, 220, 230, 240, 250, 260) of content signals.

3. An apparatus according to claim 2, wherein the control means (108) is configured for routing content signals between modules (200, 210, 220, 230, 240, 250, 260).

4. An apparatus according to claim 1, 2 or 3, wherein the output means includes a display means (18), the or each module (17) includes means (219, 219a; 225, 226; 234, 235; 245, 246; 255, 256; 265, 266) for sending control signals comprising markup language codes to the control means (108) and the control means (108) is responsive to said markup language codes to generate an image on the display means (18).

5. An apparatus according to claim 4, wherein said image constitutes part of a user interface for controlling the respective module (200, 210, 220, 230, 240, 250, 260) and the control means (108) is responsive to operation of user input means (106) in the context of a displayed image to generate control signals for the respective module (200, 210, 220, 230, 240, 250, 260).

6. An audio/video (A/V) system comprising:
one or more function-extending modules, each function-extending module capable of sending and receiving A/V data and storing control information for the function-extending module;
a module rack into which the function-extending modules are detachably inserted; and
a base module for receiving the control information from the function-extending modules mounted in the module rack, displaying the control information, and, if a user input according to the displayed control information is received, sending the user input to a corresponding function-extending module and reproducing source A/V data provided by the function-extending module in response to the sent user input.

7. The A/V system of claim 6, wherein each function-extending module stores an index page as control information and the base module has a browser for displaying a main page in which selection information for the function-extending modules is displayed, requesting an index page to a function-extending module selected through the main page, displaying the requested index page, and sending a user input, which is input through the index page, to the selected function-extending module.

8. The A/V system of claim 7, wherein the selection information is provided from the function-extending modules and display in the main page.

9. The A/V system of claim 7, wherein the function-extending module comprises:
a communications interface unit for communicating with the base module;
a memory unit for storing an Internet protocol (IP) address and the index page;
a signal processing unit for processing source A/V data; and
a control unit for providing the IP address and index page to the base module, and controlling the function-extending module so that source A/V data, which is processed by the signal processing unit in response to a user input received by the base module, is sent to the base module through the communications interface unit.

10. The A/V system of claim 9, wherein the communications interface unit is an IEEE1394 interface unit, and the signal processing unit has a transport stream processing unit for converting the A/V data into an MPEG transport stream and outputting the MPEG transport stream to the IEEE1394 interface unit.

11. The A/V system of claim 9, wherein the base module comprises:
a memory unit storing the browser;
a control unit for receiving the IP address from the function-extending module inserted into the module rack and activating the browser;
a user input unit for receiving a user input to the browser;
a signal processing unit for dividing the source A/V data received through the communications interface unit into audio data and video data and processing respective data;
an audio output unit for outputting audio data processed by the signal processing unit; and
a video output unit for outputting video data processed by the signal processing unit.

12. The A/V system of claim 11, wherein the signal processing unit further has a mixing unit for making image data or text data overlap with video data and outputting the overlapped data to the video processing unit.

13. The A/V system of claim 11, wherein the communications interface is an IEEE1394 interface unit.

14. The A/V system of claim 11, wherein the function-extending module is one of a digital broadcast receiving module, a digital satellite broadcast receiving module, a cable broadcast receiving module, a digital versatile video (DVD) module, a digital video cassette recorder (DVCR) module, a game module, an Internet access module, a hard disc drive module, and a combination of at least two among these modules.

15. The A/V system of claim 6, wherein the function-extending module comprises:
a communications interface unit for communicating with the base module;
a memory unit for storing an IP address and an index page as the control information; and
a control unit for providing the IP address and index page to the base module and controlling the function-extending module so that source A/V data in response to a user input received by the base module is sent to the base module through the communications interface unit.

16. The A/V system of claim 15, wherein the source A/V data is stored in the memory unit.

17. The A/V system of claim 15, wherein the communications interface unit is an IEEE1394 communications interface module.

18. The A/V system of claim 15, wherein the function-extending module and the base module adopt a TCP/IP protocol for client-server communications.

19. A function-extending module, which is detachably inserted into a module rack so that the function-extending module communicates with a base module capable of reproducing A/V data, the function-extending module capable of sending and receiving the A/V data, storing control information for controlling the function-extending module, and, if inserted into the module rack, providing the control information to the base module and sending source A/V data corresponding to a user input, which is received from the base module, to the base module.

20. The function-extending module of claim 19, wherein an index page is stored as the control information in the function-extending module, and the base module has a browser for displaying a main page, in which selection information for the function-extending modules is displayed, requesting an index page to a function-extending module selected through the main page displaying the index page, and sending a user input, which is input through the index page, to the selected function-extending module.

21. The function-extending module of claim 20, wherein the function-extending module comprises:
a communications interface unit for communicating with the base module;
a memory unit for storing an IP address and an index page as the control information; and
a control unit for providing the IP address and index page to the base module, and controlling the function-extending module so that source A/V data in response to a user input received from the base module, is sent to the base module through the communications interface unit.

22. The function-extending module of claim 21, wherein the source A/V data is stored in the memory unit.

23. The function-extending module of claim 21, wherein the communications interface unit is an IEEE1394 interface unit.

24. The function-extending module of claim 21, wherein the function-extending module is one of a digital broadcast receiving module, a digital satellite broadcast receiving module, a cable broadcast receiving module, a digital versatile video (DVD) module, a digital video cassette recorder (DVCR) module, a game module, an Internet access module, a hard disc drive module, and a combination of at least two among these modules.
